# EUROPEAN PATENT SPECIFICATION

(11) **EP 2 778 108 B1**
(45) Date of publication and mention of the grant of the patent: **07.10.2015**
(21) Application number: 14159490.3
(22) Date of filing: 13.03.2014
(51) Int. Cl.: B66C 1/18, B66C 1/14, B66C 13/00, F16L 3/14

(54) **Assembly to couple a conduit to a crane**
Anordnung zur Verbindung einer Leitung an einen Kran
Ensemble pour accoupler une conduite à une grue

(30) Priority: 15.03.2013 US 201361801340 P
(43) Date of publication of application: 17.09.2014
(73) Proprietor: Manitowoc Crane Companies, LLC, Manitowoc WI 54221-0066 (US)
(72) Inventor: Philbert, Robert J., Manitowoc, WI Wisconsin 54220 (US); Chaloupka, Gary N., Two Rivers, WI Wisconsin 54241 (US); O'Neil, William J., Green Bay, WI Wisconsin 54311 (US)
(74) Representative: Schwabe - Sandmair - Marx

(56) References cited:
- WO-A1-99/25636
- JP-U- S59 127 085
- US-A- 5 238 279
- US-A- 5 308 101
- US-A- 5 688 011
- US-A1- 2005 204 470

## Description

### BACKGROUND

The present invention relates to lift cranes and assemblies that may be used to support various conduits, such as electrical cables and hoses of various types, during the transportation and use of the crane. These conduits typically range from smaller than an inch to potentially several inches in diameter, depending on the function of the conduit. Regardless of the type and size, the conduits need to be run along routes and stowed in positions that minimize the risk that the conduits will be pinched, broken, or otherwise damaged during the transportation and use of the crane.

In many instances, these conduits are quite large and heavy. Previously, various cradles, such as trays, bars, and angle iron have been used to support such conduits. A disadvantage of such systems is that by their very nature these cradles are typically permanent and extend away from the structure of a crane. The permanent nature of these cradles potentially create a cascade of issues related to clearances, movement of relative parts, and act as a potential hazard to those moving and working around the crane.

Non-permanent structures, such as chains and the like, have also been used to support the conduits, but these also have various problems. For example, the conduits, as noted, are often quite heavy. Thus, the weight of any chain or chains only increases significantly the combined weight of the conduit and chains that must be raised or hoisted when installing and uninstalling the chains. Further, it typically is not possible to adjust the length of a chain easily, thus there may be several unique lengths of chain that must be used to support the various conduits at various locations around a crane. These chains of various lengths, then, may not be interchangeable depending on the particular application. Such a multiplicity of chains and specific locations would thus serve to increase the complexity and time to install and uninstall the chains during transportation, as well as increase the number of spare parts to be stocked.

For example, US Pat. No. 5,688,011 discloses a sling for lifting heaving items, such as pipes. The sling includes looped ends spaced apart from each other, and a plurality of eye-loops affixed to a side of the sling. The looped ends are selectively attachable to one of the eye-loops with a removable shackle.

Similary, International Pat. App. Publ. No. WO1999/025636, discloses another sling for lifting heaving items, such as pipes. The sling is formed of overlapping material to create a two-ply strap member. Looped ends are positioned at each end of the sling/strap member, and at least one intermediately spaced, bi-directional loop is coupled to the sling/strap member between the looped ends. The looped ends are selectively attachable to one of the eye-loops with a removable shackle.

Japanese Utility Pat. App. No. S59-127085U discloses a closed loop for cradling pipes or other conduit with eye-loops affixed to an outer surface of the closed loop. A hook may engage the closed loop itself or the eye-loops to raise any pipe or other conduit cradled within the closed loop.

Thus, there exists a need for an assembly or system for supporting conduits on a crane that is adjustable, lighter, and more easily installed than prior art systems and methods.

### BRIEF SUMMARY

An assembly or system to support and couple a conduit to a structure of a crane includes a strap configured to wrap at least partly around the conduit. The strap has a length that separates a first end from a second end.

The strap includes at least one loop affixed to it and, in some embodiments, a plurality of loops. The strap includes at least one attachment device affixed to the strap and, in some embodiments, the attachment device is affixed to the strap proximate one of the first end and the second end.

Embodiments of the attachment device include a hook that has a gap sized to pass at least one of the loops and a mooring point affixed to the structure of the crane into a space defined by the hook.

The hook optionally includes a latch configured to selectively open to permit the loop or the mooring point to pass into the space and to then close to retain the loop or the mooring point within the space. The latch includes a biasing mechanism, such as a spring, to urge the latch to close when not influenced by an external force. The strap includes in some embodiments at least a second hook affixed at either the first end or the second end, whichever is opposite from the end to which the first hook is affixed.

The strap optionally includes a tensioning mechanism configured to reduce the length of the strap to an effective length that is smaller than the length of the strap. The tensioning mechanism can be of various types known in the art, including a ratchet or lever mechanism and an adjustable slide mechanism.

The assembly or system optionally includes a support strap. The support strap is configured to couple the strap to the structure at a location different from the mooring point. The support strap also includes at least one support attachment device affixed to the support strap. Optionally, the support attachment device includes a support hook that has a gap sized to pass at least one of the loops of the strap, the loop of the support strap, and the mooring point into a space defined by the support hook. The support hook optionally includes a latch and a biasing mechanism.

The support strap also includes at least one support loop affixed to the support strap. The support loop is sized to pass at least one of the support strap, the support hook, the first strap, the first hook, and the second hook through the support loop.

The support strap also optionally includes a tensioning mechanism configured to reduce the length of the support strap to an effective length that is smaller than the length of the support strap.

Various embodiments of the present inventions are set forth in the attached figures and in the Detailed Description as provided herein and as embodied by the claims. It should be understood, however, that this Summary does not contain all of the aspects and embodiments of the one or more present inventions, is not meant to be limiting or restrictive in any manner, and that the invention(s) as disclosed herein is/are and will be understood by those of ordinary skill in the art to encompass obvious improvements and modifications thereto.

Additional advantages of the present invention will become readily apparent from the following discussion, particularly when taken together with the accompanying drawings.

### BRIEF DESCRIPTION OF THE DRAWINGS

Fig. 1 is an embodiment of an assembly to support and couple a conduit to a structure of a crane.
Fig. 2 is the embodiment of the assembly in Fig. 1 configured differently to support and couple a conduit to the structure of the crane.
Fig. 3 is a perspective view of a first strap of the assembly in Figs. 1 and 2.
Fig. 4 is a top view of the first strap in Fig. 3.
Fig. 5 is a side view of the first strap in Fig. 3.
Fig. 6 is a perspective view of a tensioning mechanism.
Fig. 7 is another perspective view of the tensioning mechanism in Fig. 6.
Fig. 8 is a side view of the first strap in Fig. 3 with a support strap.
Fig. 9 is a perspective view of the support strap in Fig. 8.
Fig. 10 is a top view of the support strap in Fig. 8.
Fig. 11 is a side view of the support strap in Fig. 8.
Fig. 12 is a side view of an embodiment of a crane.

### DETAILED DESCRIPTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

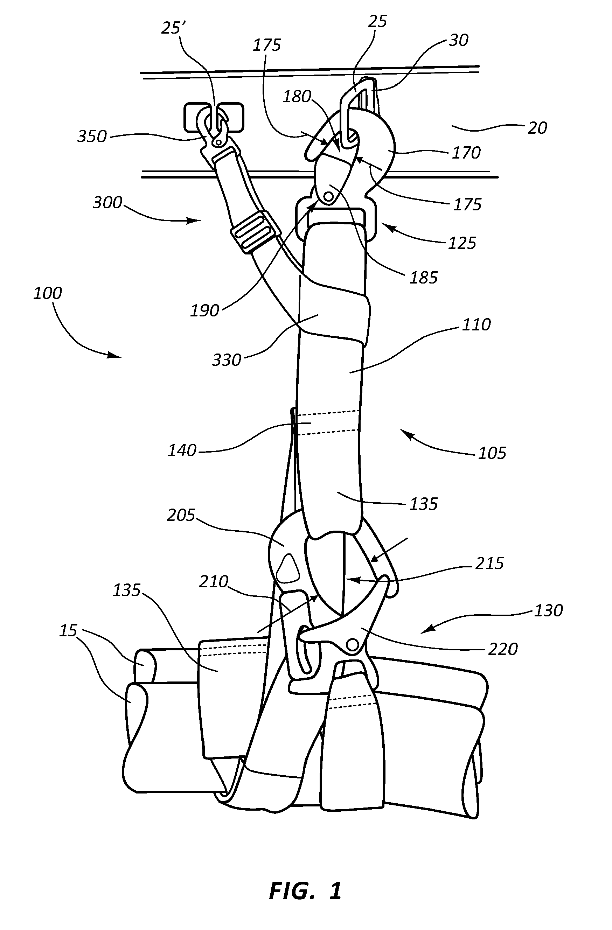

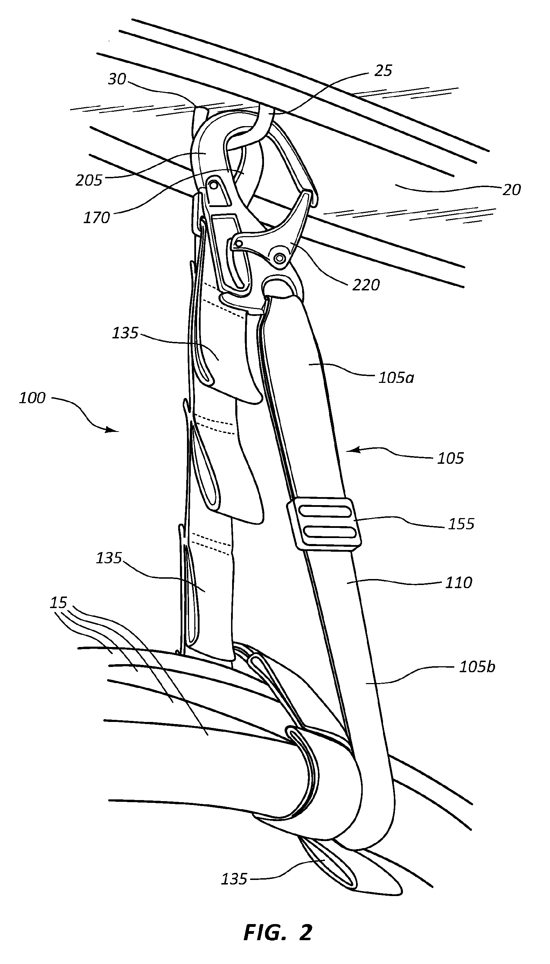

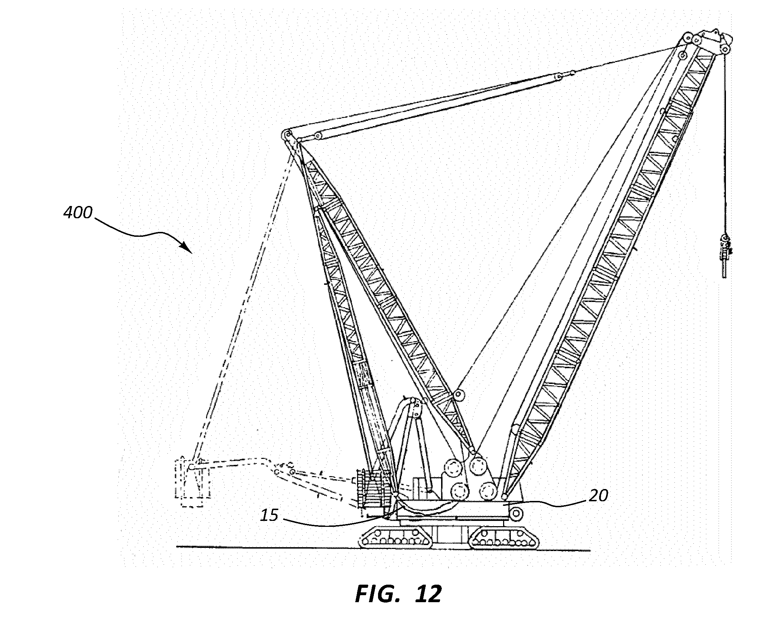

Illustrated in Figs. 1 and 2 are an embodiment of an assembly or system 100 to support and couple a conduit or conduits 15 to a structure 20 of a crane 400 (Fig. 12). While the disclosed embodiment discusses the use of the assembly 100 with a crane 400, it finds use with construction equipment and vehicles of other various types.

Figure 1 illustrates two conduits 15, but the number of conduits can range from one to several, as illustrated in Fig. 2 with four conduits 15. The conduits 15 may include one or more of electric cables, bundled electric cables, hoses, fluid lines, hydraulic lines, and the like that may need to be stowed during transportation and use of the crane so as to minimize the risk that the conduits 15 are pinched, broken, or become otherwise damaged.

The structure 20 optionally includes a mooring point 25 to which the assembly 10 can be coupled. The mooring point 25 can be an anchor, post, peg, hook, slot, pillar, threaded bolts and screws, and/or other types of mechanical structures for coupling the assembly 100 to the crane structure 20. The mooring point 25 may be affixed to a bracket 30 or be formed integrally with the structure 20, as seen with mooring point 25' in Fig. 1.

The assembly 100 includes a first strap 105 configured to wrap at least partly around the conduit 15. The strap 105 in Fig. 1 is shown wrapped at least twice around the conduit 15. A user may wrap the strap 105 around the conduit 15 one, two, or more times depending upon the length of the strap, the size of the conduit 15, the number of conduit(s) 15, and the how tightly the user desires to bundle the conduit 15, among other factors.

The first strap 105 is typically formed a woven or spun material, such as nylon or other synthetic material, but it can also be formed of leather, hemp, fiber, and other similar materials.

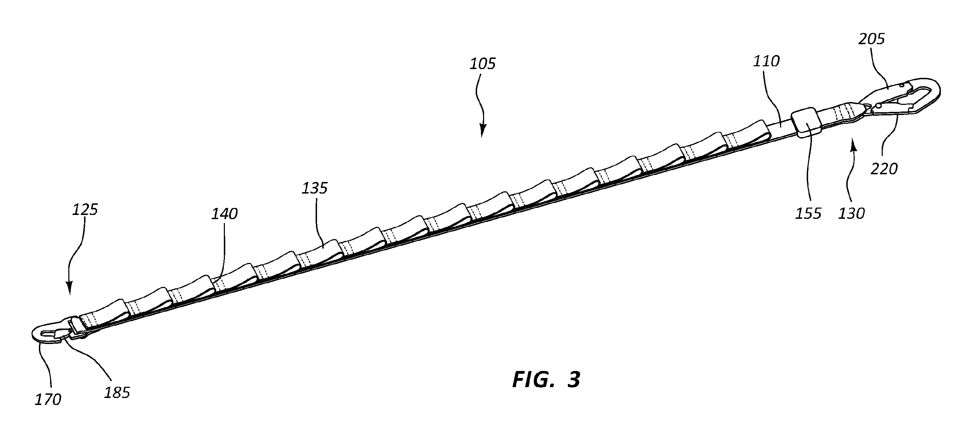

The first strap 105 includes a first side 110 and second side 115 spaced apart from the first side, as best seen in Figs. 3 - 5. The strap 105 has a length 120 that separates a first end 125 from a second end 130.

The first strap 105 optionally also includes at least one loop 135 affixed to it. As illustrated in FIGS. 1 - 5, the first strap 105 includes a plurality of loops 135. The loops 135 may be formed of the same material as the first strap 105 or from a different material. Each loop 135 typically includes a loop base 140 at which the loop 135 is affixed to the first strap 105, typically through stitching, friction, heating, glue, and similar means of affixing the loop 135 to the first strap 105. In some embodiments, at least one loop 135 is affixed to the first side 110 while at least another loop 135" is affixed to the second side 115 of the first strap 105.

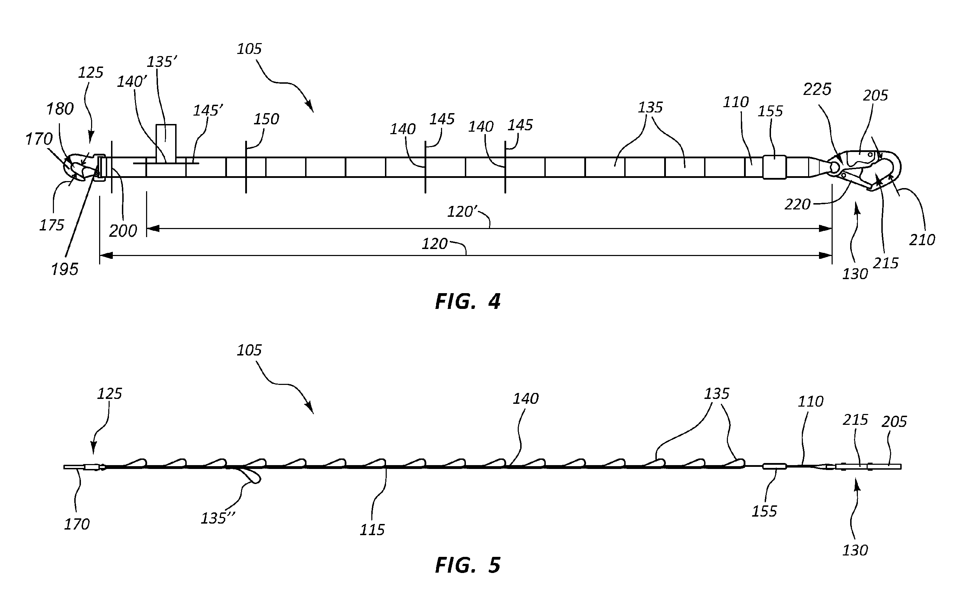

The loop base 140 includes an axis 145 that typically is substantially parallel (e.g., +/- 10 degrees) to a short axis 150 of the first strap 105 as best illustrated in Fig. 4. For those embodiments with a plurality of loops 135, the axis 145 of least one loop base 140 optionally is substantially parallel to the axis 145 of another loop base 140. In some embodiments, the first strap 105 may include alternatively or additionally one or more loops 135' having a loop base 140' with an axis 145' that is not substantially parallel to the short axis 150 of the first strap 105.

The first strap 105 includes at least one attachment device 170, which may include open hooks; closable hooks; loops and/or holes formed within the first strap 105 and configured to hang from the mooring point 25 in the form of a hook or peg on the crane structure 20; plates with any variety of slots and/or holes that can be bolted or otherwise permanently or temporarily attached to the mooring point 25; and other similar and/or equivalent structures. In the embodiment illustrated in Figs. 1 - 5, the at least one attachment device 170 is a hook affixed to the first strap 105 and is configured to be attached to at least one of the loop 135 and the mooring point 25. (While this specification generally discusses the at least attachment device 170 within the context of a hook, it will be understood that any of the above described alternatives and their equivalents fall within the scope of the disclosure and claims.) The attachment device or hook 170 may be affixed at any point along the length 120 of the first strap 105. In some embodiments, the hook 170 is affixed proximate one of the first end 125 and the second end 130. In the embodiment illustrated in Figs. 1 - 5, the hook 170 is affixed to the first strap 105 at the first end 125. Typically, the hook 170 is permanently affixed to the strap 105, although in some embodiments the hook 170 may be removably affixed to the strap 105. The hook 170 includes a gap 175 sized to pass at least one of the loops 135 and the mooring point 25 into a space 180 defined by the hook 170, as best seen in Figs. 1 - 3.

The hook 170 optionally includes a latch 185 configured to selectively open to permit the loop 135 or the mooring point 25 to pass into the space 180 and to then close to retain the loop 135 or the mooring point 25 within the space 180. The latch 185 includes a biasing mechanism 190, such as a spring, to urge the latch 185 to close when not influenced by an external force.

In the embodiment illustrated, the hook 170 includes a hook base 195 proximate to the first end 125 or the second end 130 to which the hook 170 is affixed to the strap 105. The hook base 195 has an axis 200 that is substantially parallel (e.g., +/- 10 degrees) to the short axis 150 of the first strap 105. In some embodiments, the hook 170 may have a hook base 195 with an axis that is not substantially parallel to the short axis 150 of the first strap 105.

The first strap 105 includes in some embodiments at least a second attachment device 205, which in the embodiment illustrated is a second hook affixed to the first strap at some point along the length 120 of the first strap 105. (As with the at least one attachment device 170, this specification generally discusses the second attachment device 205 within the context of a hook, although it will be understood that any of the above described alternatives of an attachment device and their equivalents fall within the scope of the disclosure and the claims.) In the embodiment illustrated, the second hook 205 is affixed proximate either the first end 125 or the second end 130, whichever is opposite from the end proximate to which the first hook 170 is affixed. Typically, the second hook 205 also is permanently affixed to the strap 105, although in some embodiments the second hook 205 may be removably affixed to the strap 105. The second hook 205 includes a gap 210 sized to pass at least one of the loops 135 and the mooring point 25 into a space 215 defined by the second hook 205, as best seen in Figs. 1- 3. The second hook 205 also optionally includes a latch 220 with a biasing mechanism 225 to urge the latch 220 to close when not influenced by an external force.

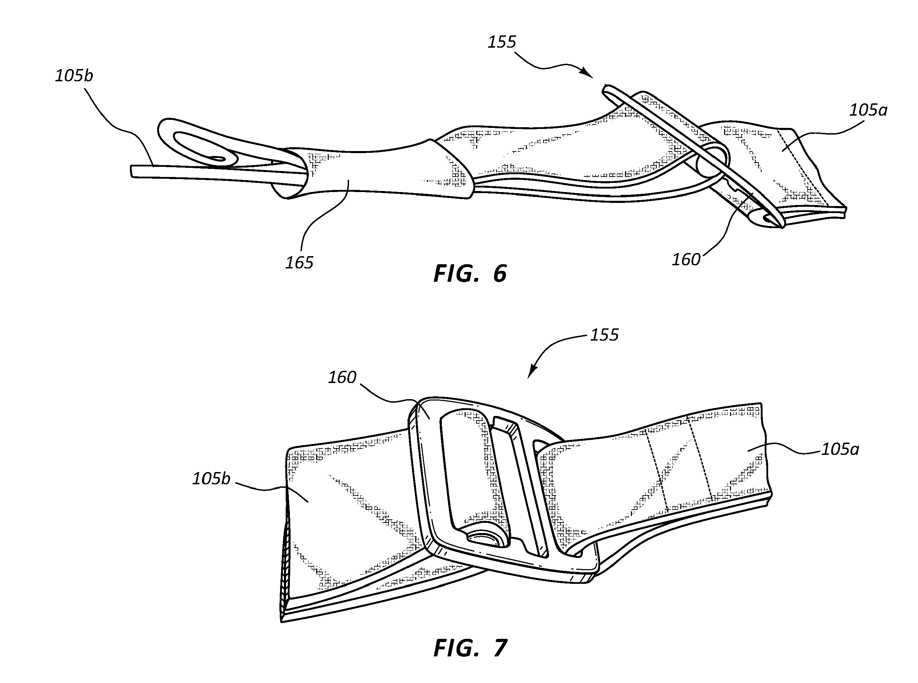

The first strap 105 optionally includes a tensioning mechanism 155 configured to reduce the length 120 of the first strap 105 to an effective length 120' that is smaller than the length 120, as illustrated in Figs. 2 - 7. The tensioning mechanism 155 can be of various types known in the art, including a ratchet or lever mechanism and an adjustable slide mechanism 160, as best illustrated in Figs. 6 and 7. In those embodiments in which a tensioning mechanism 155 or adjustable slide mechanism 160 is employed, the first strap 105 is divided into two portions, a first portion 105a and a second portion 105b. For example in Figs. 6 and 7, each portion 105a and 105b is threaded into an opposing side of the adjustable slide mechanism 160, thereby coupling the portion 105a to the portion 105b. A user may selectively adjust the length 120 of the first strap 105 to an effective length 120' by threading either more or less of one or both of the first portion 105a and the second portion 105b. An optional band 165, such as an elastic loop, wraps around the double-backed second portion 105b to prevent any excess material from flapping and snagging on anything. Of course, the optional band 165 can be used on the first portion 105a.

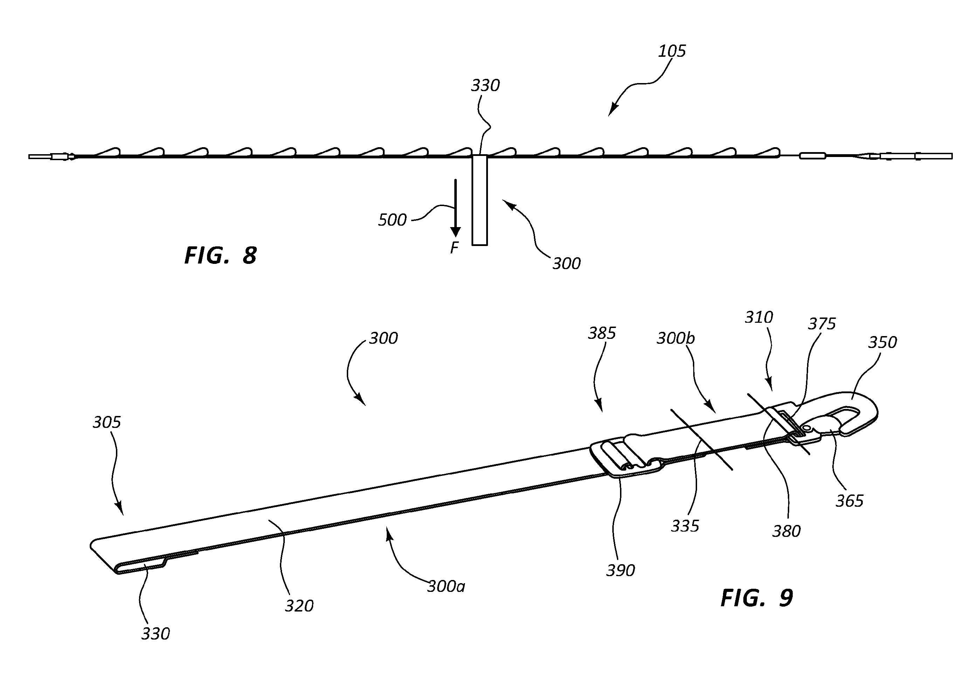

The assembly or system 100 optionally includes a strap, or support strap, 300, as illustrated in Figs. 1 and 8 - 11. The support strap 300 is configured to couple the first strap 105 to the structure 20 at a location different from the mooring point 25. For example, in Fig. 1 the support strap 300 is coupled to the structure 20 at the mooring point 25'. In this way, the support strap 300 is able to apply a force 500 in a lateral direction to the first strap 105, as illustrated in Fig. 8, so as to reduce any movement, swinging, or swaying of the first strap 105 while the crane is transported or in use.

The support strap 300 includes a first end 305 spaced apart from a second end 310 by a length 315 of the support strap 300. In addition, the support strap 300 includes a first side 320 spaced apart from a second side 325.

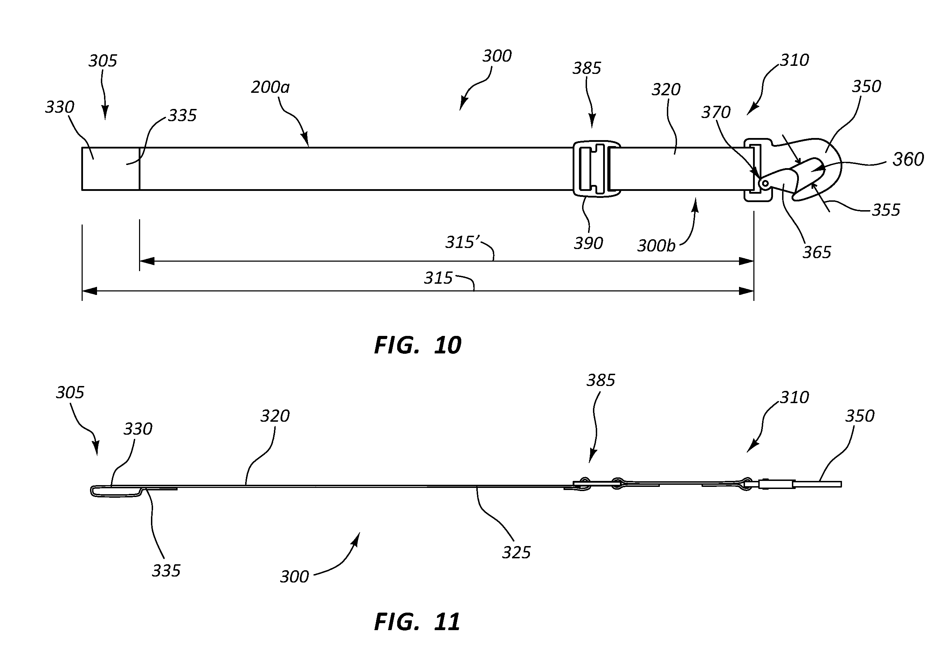

The support strap 300 includes at least a support attachment device 350, such as a support hook affixed to the support strap at some point along the length 315 of the support strap 300. (As with the at least one attachment device 170 and the second attachment device 205, this specification generally discusses the support attachment device 350 within the context of a hook, although it will be understood that any of the above described alternatives of an attachment device and their equivalents fall within the scope of the disclosure and the claims.) In the embodiment illustrated, the support hook 350 is affixed to the support strap 300 proximate one of the first end 305 and the second end 310. In the embodiment illustrated in Figs. 1 and 8 - 11, the support hook 350 is affixed to the second end 310 of the support strap 300. Typically, the support hook 350 is permanently affixed to the support strap 300, although in some embodiments the support hook 350 may be removably affixed to the strap 300. The support hook 350 includes a gap 355 sized to pass at least one of the loops 135 of the first strap 105, the loop 330 of the support strap 300, and the mooring point 25, 25' into a space 360 defined by the hook 350, as best seen in Fig. 10.

The support hook 350 optionally includes a latch 365 configured to selectively open to permit the various loops and mooring points to pass within the space 360. The latch 365 includes a biasing mechanism 370, such as a spring, to urge the latch 365 to close when not influenced by an external force.

The support hook 360 includes a support hook base 375 proximate to the first end 305 or the second end 310 to which the support hook 360 is affixed to the support strap 330, as best illustrated in Fig. 9. The support hook base 375 has an axis 380 that is substantially parallel (e.g., +/- 10 degrees) to the short axis 335 of the support strap 300. In some embodiments, the support hook 360 may have a support hook base 375 with an axis that is not substantially parallel to the short axis 335 of the support strap 300.

The support strap 300 includes at least one loop, or support loop, 330 affixed to the support strap 300 at a point along the length 315 of the support strap 300. In the embodiment illustrated, the support loop 330 is affixed to the support strap 300 proximate one of the first end 305 and the second end 310. As illustrated in Figs. 1 and 9 - 11, the support loop 330 is affixed to the support strap 300 at the first end 305. The support loop 330 may be formed of the same material as the support strap 300 or from a different material. The support loop 330 typically includes a loop base 335 at which the support loop 330 is affixed to the support strap 300, typically through stitching, friction, heating, glue, and similar means of affixing the support loop 330 to the support strap 300. In some embodiments, the support loop 330 is affixed to the first side 320, while in other embodiments the support loop 330 is affixed to the second side 325 of the support strap 300. The support loop 330 is sized to pass at least one of the support strap 300, the support hook 350, the first strap 105, the first hook 170, and the second hook 205 through the support loop 330.

As like the first strap 105, the support strap 300 optionally includes a tensioning mechanism 385 configured to reduce the length 315 of the support strap 300 to an effective length 315' that is smaller than the length 300, as illustrated in Figs. 9 - 11. The tensioning mechanism 385 can be of various types known in the art, including a ratchet or lever mechanism and an adjustable slide mechanism 390, as best illustrated in Figs. 9 and 10, and operable in the same manner as the adjustable slide mechanism 160 described above.

As one of skill should understand from the above description and figures, the support strap 300 can act alone without the first strap 105 to couple and support a conduit 15 to the structure 20. In other words, the support strap 300 as described above is another embodiment of the first strap 105. When used alone, the support strap 300 can be wrapped at least partly around one or more conduits 15. Once so wrapped, the attachment device 350 or support hook 350 can be threaded through the support loop 330, thereby securing the conduit 15. The support strap 300 can then be coupled with the support hook 350 to the structure 15 via the mooring point 25. In such a way, the support strap 300 is considered the first strap 105, as described above.

The foregoing description of the systems and assemblies for storing conduits also encompass methods for storing a conduit 15 on a mooring 25 point affixed to a structure 20 on a crane 400. Such methods include obtaining a strap 105 configured to wrap at least partly around a conduit 15. The strap 105 includes a first side 110 and a second side 115 spaced apart from the first side 110. The strap 105 also includes a first end 125 and a second end 135 spaced apart from the first end 125 by a length 120. Optionally, at least one loop 135 is affixed to the strap 105, as is at least one attachment device 170. The at least one attachment device 170 is configured to be attached to at least one of the loop 135 and the mooring point 25. A user wraps the strap 105 at least partly around the conduit 15 and attaches the attachment device 170 to one of the loop 135 and the mooring point 25.

It should be understood that various changes and modifications to the presently preferred embodiments described herein will be apparent to those skilled in the art. Such changes and modifications can be made without diminishing its intended advantages. It is therefore intended that such changes and modifications be covered by the appended claims.

## Claims

1. An assembly (100) to support and couple a conduit (15) to a structure (20) on a crane (400) comprising:
a strap (105) configured to wrap at least partly around said conduit (15), said strap (105) including:
a first side (110) and a second side (115) spaced apart from said first side (110) ;
a first end (125) and a second end (130) spaced apart from said first end (125) by a length (120) of said strap (105);
at least one loop (135) affixed to said strap (105); and,
**characterized by** a mooring point (25) affixed to said structure (20) and at least one attachment device (170) affixed to said strap (105), wherein said attachment device (170) is configured to be attached to at least one of said loop (135) and said mooring point (25).

2. The assembly (100) of claim 1, wherein said at least one attachment device (170) is affixed to said strap (105) proximate one of said first end (125) and said second end (130).

3. The assembly (100) of any of claims 1 or 2, wherein said at least one attachment device (170) comprises at least one hook having a gap (175) sized to pass at least one of said loop (135) and said mooring point (25) into a space (180) defined by said hook (170).

4. The assembly (100) of any of claims 2 - 3, wherein said loop (135) is affixed to said strap (105) proximate one of said first end (125) and said second end (130) opposite from said at least one attachment device (170).

5. The assembly (100) of any of claims 2 - 4, further comprising at least a second attachment device (205) affixed to said strap (105) proximate one of said first end (125) and said second end (130) opposite from said at least one attachment device (170).

6. The assembly (100) of any of claims 3 - 5, wherein said at least one hook further comprises a latch (185) sized to span said gap (175), said latch (185) configured to selectively open to permit at least one of said loop (135) and said mooring point (25) to pass into said space (180) and to close to retain said at least one of said loop (135) and said mooring point (25) within said space (180).

7. The assembly (100) of claim 6, wherein said latch (185) includes a biasing mechanism (190) to urge said latch (185) to close when not influenced by an external force.

8. The assembly (100) of any of claims 3 - 7, wherein said at least one hook includes a hook base (195), said hook base (195) having an axis (200) substantially parallel to a short axis (145) of said strap (105).

9. The assembly (100) of any of claims 1 - 8, wherein said at least one loop (135) further comprises a loop base (140), said loop base (140) having an axis (145) substantially parallel to a short axis (150) of said strap (105).

10. The assembly (100) of any of claims 1 - 9, wherein said at least one loop (135) further comprises a plurality of loops and wherein each loop (135) of said plurality of loops includes a loop base (140) having an axis (145) and wherein at least said axis (145) of one loop base (140) is substantially parallel to said axis (145) of at least another loop base (140).

11. The assembly (100) of claim 10, wherein at least one loop (135) of said plurality of loops is affixed to said first side (110) of said strap (105) and at least another loop (135") of said plurality of loops is affixed to said second side (115) of said strap (105).

12. The assembly (100) of any of claims 1 - 11, further comprising a tensioning mechanism (155) configured to reduce said length (120) of said strap (105) to an effective length (120') smaller than said length (120).

13. The assembly (100) of any of claims 1 - 12, wherein said at least one loop (135) is sized to pass at least one of said strap (105) and said at least one attachment device (170) through said at least one loop (135).

14. The assembly (100) of any of claims 1 - 13, further comprising a support strap (300) configured to couple said strap (105) to said structure (20) at a location different from said mooring point (25), said support strap including:
a first end (305) and a second end (310) spaced apart from said first end (305) by a length (315) of said support strap (300);
at least one support attachment device (350) affixed to said support strap (300); and,
at least one support loop (330) affixed to said support strap (300), said support loop (330) sized to pass at least one of said support strap (300), said support attachment device (350), said strap (105), and said at least one attachment device (170) of said strap (105) through said support loop (330).

15. The assembly (100) of claim 14, wherein said support strap (300) further comprises a tensioning mechanism (385) configured to reduce said length (315) of said support strap (300) to an effective length (315') smaller than said length (300).

## Patentansprüche

1. Anordnung (100) zur Stützung und Kopplung einer Leitung (15) an eine Struktur (20) an einem Kran (400) umfassend:
einen Gurt (105), welcher ausgebildet ist zumindest teilweise die Leitung (15) zu umwickeln, wobei der Gurt (105) umfasst:
eine erste Seite (110) und eine zweite Seite (115), welche von der ersten Seite (110) beabstandet ist;
ein erstes Ende (125) und ein zweites Ende (130), welches von dem ersten Ende (125) durch eine Länge (120) des Gurtes (105) beabstandet ist;
zumindest eine Schleife (135) welche an dem Gurt (105) befestigt ist; und
**gekennzeichnet durch**,
einen Befestigungspunkt (25), welcher an der Struktur (20) befestigt ist, und zumindest eine Befestigungsvorrichtung (170), welche an dem Gurt (105) befestigt ist, wobei die Befestigungsvorrichtung (170) ausgebildet ist an zumindest einem aus der Schleife (135) und dem Befestigungspunkt (25) befestigt zu werden.

2. Anordnung (100) nach Anspruch 1, wobei die zumindest eine Befestigungsvorrichtung (170) an den Gurt (105) nahe einem aus dem ersten Ende (125) und dem zweiten Ende (130) befestigt ist.

3. Anordnung (100) nach einem der Ansprüche 1 oder 2, wobei die zumindest eine Befestigungsvorrichtung (170) zumindest einen Haken mit einem Spalt (175) aufweist, welcher so bemessen ist, dass dieser zumindest eines aus der Schleife (135) und dem Befestigungspunkt (25) in einen durch den Haken (170) bestimmten Raum (180) führt.

4. Anordnung (100) nach einem der Ansprüche 2 bis 3, wobei die Schleife (135) an dem Gurt (105) nahe einem aus dem ersten Ende (125) und dem zweiten Ende (130) gegenüber der zumindest einen Befestigungsvorrichtung (170) befestigt ist.

5. Vorrichtung (100) nach einem der Ansprüche 2 bis 4, ferner umfassend zumindest eine zweite Befestigungsvorrichtung (205), welche an dem Gurt (105) nahe einem aus dem ersten Ende (125) und dem zweiten Ende (130) gegenüber der zumindest einen Befestigungsvorrichtung (170) befestigt ist.

6. Anordnung (100) nach einem der Ansprüche 3 bis 5, wobei der zumindest eine Haken ferner einen Verschluss (185) umfasst, welcher so bemessen ist, dass dieser den Spalt (175) zu überbrückt, wobei der Verschluss (185) ausgebildet ist, um sich selektiv zu öffnen, um zumindest einem aus der Schleife (135) und dem Befestigungspunkt (25) zu erlauben in den Raum (180) zu gelangen, und sich zu schließen, um zumindest eines aus der Schleife (135) und dem Befestigungspunkt (25) in dem Raum (180) zu halten.

7. Anordnung nach Anspruch 6, wobei der Verschluss (185) einen Vorspannmechanismus (190) umfasst, um den Verschluss (185) zu drängen zu schließen, wenn dieser nicht durch eine äußere Kraft beeinflusst wird.

8. Vorrichtung (100) nach einem der Ansprüche 3 bis 7, wobei der zumindest eine Haken eine Hakenbasis (195) umfasst, wobei die Hakenbasis (195) eine Achse (200) aufweist, welche im Wesentlichen parallel zu einer kurzen Achse (145) des Gurtes (105) ist.

9. Vorrichtung (100) nach einem der Ansprüche 1 bis 8, wobei die zumindest eine Schleife (135) ferner eine Schleifenbasis (140) umfasst, wobei die Schleifenbasis (140) eine Achse (145) aufweist, welche im Wesentlichen parallel zu einer kurzen Achse (150) eines Gurtes (105) ist.

10. Vorrichtung (100) nach einem der Ansprüche 1 bis 9, wobei die zumindest eine Schleife (135) ferner eine Vielzahl von Schleifen umfasst und wobei jede Schleife (135) der Vielzahl von Schleifen eine Schleifenbasis (140) mit einer Achse (145) aufweist und wobei zumindest die Achse (145) einer Schleifenbasis (140) im Wesentlichen parallel zu der Achse (145) zumindest einer anderen Schleifenbasis (140) ist.

11. Vorrichtung (100) nach Anspruch 10, wobei zumindest eine Schleife (135) der Vielzahl von Schleifen an der ersten Seite (110) des Gurtes (105) befestigt ist und zumindest eine andere Schleife (135") der Vielzahl von Schleifen an der zweiten Seite (115) des Gurtes (105) befestigt ist.

12. Vorrichtung (100) nach einem der Ansprüche 1 bis 11, ferner umfassend einen Spannmechanismus (155), welcher ausgebildet ist die Länge (120) des Gurtes (105) zu einer effektiven Länge (120'), welche kleiner ist als die Länge (120), zu verringern.

13. Vorrichtung (100) nach einem der Ansprüche 1 bis 12, wobei die zumindest eine Schleife (135) so bemessen ist, dass diese zumindest eines aus dem Gurt (105) und der zumindest einen Befestigungsvorrichtung (170) durch die zumindest eine Schleife (135) führt.

14. Vorrichtung (100) nach einem der Ansprüche 1 bis 13, ferner umfassend einen Stützgurt (300) ausgebildet, um den Gurt (105) an die Struktur (20) an einer Stelle verschieden vom Befestigungspunkt (25) zu kuppeln, wobei der Stützgurt umfasst:
ein erstes Ende (305) und ein zweites Ende (310), welches von dem ersten Ende (305) durch eine Länge (315) des Stützgurtes (300) beabstandet ist;
zumindest eine Stützbefestigungsvorrichtung (350), welche an dem Stützgurt (300) befestigt ist; und
zumindest eine Stützschleife (330), welche an dem Stützgurt (300) befestigt ist, wobei die Stützschleife (330) so bemessen ist, dass diese zumindest eines aus dem Stützgurt (300), der Stützbefestigungsvorrichtung (350), dem Gurt (105) und der zumindest einen Befestigungsvorrichtung (170) des Gurtes (105) durch die Stützschleife (330) führt.

15. Vorrichtung (100) nach Anspruch 14, wobei der Stützgurt (300) ferner einen Spannmechanismus (385) umfasst, welcher ausgebildet ist die Länge (315) des Stützgurtes (300) zu einer effektiven Länge (315'), welche kleiner ist als die Länge (300), zu verringern.

## Revendications

1. Ensemble (100) pour soutenir et coupler une conduite (15) à une structure (20) sur une grue (400) comprenant :
une sangle (105) destinée à s'enrouler, du moins en partie, autour de ladite conduite (15), ladite sangle (105) comprenant :
un premier côté (110) et un deuxième côté (115) espacé dudit premier côté (110) ;
une première extrémité (125) et une deuxième extrémité (130) espacées de ladite première extrémité (125) par une longueur (120) de ladite sangle (105) ;
au moins une boucle (135) fixée à ladite sangle (105) ; et,
**caractérisé par** un point d'attache (25) fixé à ladite structure (20) et au moins un dispositif de fixation (170) fixé à ladite sangle (105), dans lequel ledit dispositif de fixation (107) est conçu pour être fixé à au moins une de ladite boucle (135) et dudit point d'attache (25).

2. L'ensemble (100) selon la revendication 1, dans lequel ledit au moins un dispositif de fixation (170) est fixé à ladite sangle (105) à proximité d'une de ladite première extrémité (125) et de ladite deuxième extrémité (130).

3. L'ensemble (100) selon l'une des revendications 1 ou 2, dans lequel ledit au moins un dispositif de fixation (170) comprend au moins un crochet possédant un orifice (175) dimensionné pour faire passer au moins une de ladite boucle (135) et dudit point d'attache (25) dans un espace (180) défini par ledit crochet (170).

4. L'ensemble (100) selon l'une des revendications 2 à 3, dans lequel ladite boucle (135) est fixée à ladite sangle (105) à proximité d'une de ladite première extrémité (125) et de ladite deuxième extrémité (130) opposée audit au moins un dispositif de fixation (170).

5. L'ensemble (100) selon l'une des revendications 2 à 4, comprenant par ailleurs au moins un deuxième dispositif de fixation (205) fixé à ladite sangle (105) à proximité d'une de ladite première extrémité (125) et de ladite deuxième extrémité (130) opposée audit au moins un dispositif de fixation (170).

6. L'ensemble (100) selon l'une des revendications 3 à 5, dans lequel ledit au moins un crochet comprend par ailleurs un loquet (185) dimensionné pour couvrir ledit orifice (175), ledit loquet (185) étant conçu pour s'ouvrir sélectivement afin de permettre au moins à l'une de ladite boucle (135) et dudit point d'attache (25) de passer dans ledit espace (180) et de se fermer pour retenir ladite au moins une de ladite boucle (135) et dudit point d'attache (25) dans ledit espace (180).

7. L'ensemble (100) selon la revendication 6, dans lequel ledit loquet (185) comprend un mécanisme de sollicitation (190) pour presser ledit loquet (185) afin de le fermer lorsqu'il n'est pas influencé par une force externe.

8. L'ensemble (100) selon l'une des revendications 3 à 7, dans lequel ledit au moins un crochet comprend une base de crochet (195), ladite base de crochet (195) possédant un axe (200) globalement parallèle à un axe court (145) de ladite sangle (105).

9. L'ensemble (100) selon l'une des revendications 1 à 8, dans lequel ladite au moins une boucle (135) comprend par ailleurs une base de boucle (140), ladite base de boucle (140) possédant un axe (145) globalement parallèle à un axe court (150) de ladite sangle (105).

10. L'ensemble (100) selon l'une des revendications 1 à 9, dans lequel ladite au moins une boucle (135) comprend par ailleurs une pluralité de boucles et dans lequel chaque boucle (135) de ladite pluralité de boucles comprend une base de boucle (140) possédant un axe (145) et dans lequel au moins ledit axe (145) d'une base de boucle (140) est globalement parallèle audit axe (145) d'au moins une autre base de boucle (140).

11. L'ensemble (100) selon la revendication 10, dans lequel au moins une boucle (135) de ladite pluralité de boucles est fixée audit premier côté (110) de ladite sangle (105) et au moins une autre boucle (135") de ladite pluralité de boucles est fixée audit deuxième côté (115) de ladite sangle (105).

12. L'ensemble (100) selon l'une des revendications 1 à 11, comprenant par ailleurs un mécanisme tendeur (155) destiné à réduire ladite longueur (120) de ladite sangle (105) à une longueur effective (120') inférieure à ladite longueur (120).

13. L'ensemble (100) selon l'une des revendications 1 à 12, dans lequel ladite au moins une boucle (135) est dimensionnée pour laisser passer au moins une de ladite sangle (105) et dudit au moins un dispositif de fixation (170) au travers de ladite au moins une boucle (135).

14. L'ensemble (100) selon l'une des revendications 1 à 13, comprenant par ailleurs une sangle de support (300) destinée à coupler ladite sangle (105) à ladite structure (20) dans un emplacement différent dudit point d'attache (25), ladite sangle de support comprenant :
une première extrémité (305) et une deuxième extrémité (310) espacée de ladite première extrémité (305) d'une longueur (315) de ladite sangle de support (300) ;
au moins un dispositif de fixation de support (305) fixé à ladite sangle de support (300) ;
et
au moins une boucle de support (330) fixée à ladite sangle de support (300), ladite boucle de support (330) étant dimensionnée pour faire passer au moins une de ladite sangle de support (300), dudit dispositif de fixation de support (350), de ladite sangle (105) et dudit au moins un dispositif de fixation (170) de ladite sangle (105) au travers de ladite boucle de support (330).

15. L'ensemble (100) selon la revendication 14, dans lequel ladite sangle de support (300) comprend par ailleurs un mécanisme tendeur (385) destiné à réduire ladite longueur (315) de ladite sangle de support (300) a une longueur effective (315') inférieure à ladite longueur (315).
